# EUROPEAN PATENT APPLICATION

(11) **EP 3 502 954 A1**
(43) Date of publication of application: **26.06.2019**
(21) Application number: 17209282.7
(22) Date of filing: 21.12.2017
(51) Int. Cl.: G06K 9/00

(54) **METHOD OF FACIAL RECOGNITION FOR AUTHENTICATING USER OF ELECTRONIC DEVICE AND ELECTRONIC DEVICE**

(71) Applicant: Vestel Elektronik Sanayi ve Ticaret A.S., 45030 Manisa (TR)
(72) Inventor: KIRISKEN, Barbaros, 45030 Manisa (TR)
(74) Representative: Beck Greener LLP

(57) **Abstract**

The application describes a method of facial recognition for authenticating a user of an electronic device and an electronic device (100). The method comprises capturing at least a low resolution image with a low resolution image capture device (101) and analysing the low resolution image to detect the presence of a face in the image. Where a face is detected, a high resolution image capture device (102) is then activated to capture at least one high resolution image. The high resolution image is then analysed to recognise the face of an authorised user of the device. If the face is recognised, the user is authenticated and the device is placed in second configuration in which additional functionality of the device is made available to the user.

## Description

The present invention relates to a method of facial recognition for authenticating a user of an electronic device and to an electronic device.

Various schemes are known to authenticate a user of an electronic device and authorise the user to access various functionality of the device. For instance, taking the example of a mobile phone, the user can be authenticated by inputting a correct pin codes, drawing a special pattern on the screen, via a finger print scanner, and other techniques. Upon successful authentication, the mobile phone is unlocked so that the user can use the full functionality.

A further approach which is becoming increasingly popular is unlocking a mobile phone or similar computing device using facial recognition via the device's camera. For example Apple (TRM) Face ID (TRM) technology and Android (RTM) "Trusted Face" (RTM) technology are two commercially available technologies at the time of writing. Many other schemes for facial recognition are known.

Leaving aside the problems of accurately and securely recognising a user's face, two further important problems with this approach are power consumption and speed. In such systems, the camera preferably needs to be always turned on so that it is immediately available to identify the user when a face is presented to the camera. This results in power consumption increases which is generally not preferred and which in particular will more quickly drain the battery life of a battery powered device, which is an important disadvantage, particularly in mobile devices. Some techniques only turn on the camera when the device senses the user picking up and positioning the phone, which is done by data collected from accelerometer/gyro sensors typically found in such devices. However, because there is necessarily a delay in practice between the movement being detected and camera being turned on, then problems related with speed of authorization occurs which causes frustration to the user.

The present disclosure aims to address or mitigate these problems.

According to a first aspect of the present invention, there is provided a method of facial recognition for authenticating a user of an electronic device: the method comprising:
in a first configuration of the electronic device, where a first image capture device is activated and a second image capture device is deactivated in the electronic device, the first image capture device having lower resolution than the second image capture device, capturing at least a low resolution image with the first image capture device;
analysing the low resolution image to detect the presence of a face in the image;
where a face is detected, activating the second image capture device to capture at least one high resolution image;
analysing at least the high resolution image to recognise the face of an authorised user of the device; and
if the face is recognised, authenticating the user and placing the device in a second configuration in which additional functionality of the device is made available to the user.

The low resolution camera has a low frame rate and/or low image resolution, and consumes less power than the high resolution camera. This means that there is little "cost" in terms of power consumption in having this camera activated at all times the device is in a standby mode, i.e. first configuration. Accordingly, the low power camera can be of a type that has no standby mode or, if it does, is configured by the device to be on even when the overall device is locked or in a standby mode.

The low resolution camera has sufficient resolution to allow the detection of the presence of a face in the image or stream of images it captures. Thus, in an initial step, the low resolution camera is used to detect the presence of a human face, which can be any face, without any attempt to analyse the images captured by the low to recognise the face. Detection of a face in the field of view of the low resolution camera then causes the high resolution camera to be activated to try to recognise a specific face in the its field of view.

Thus, the high resolution, high power camera is only activated when needed, i.e. when a face is presented to the device, as determined by the low resolution camera. This saves power in the device without causing significant delays in the facial recognition process.

This technique is applicable to all electronic devices with dual camera systems, but most preferably mobile devices, where power concerns are acute.

Preferred embodiment relate to authorizing or unlocking a mobile phone or the like using facial recognition with improved speed and power consumption. Nonetheless, the technology can be used in any electronic system employing facial recognition technology to selectively provide some functionality for a particular user when recognised, and where power used is a concern.

In an embodiment, analysing the high resolution image comprises comparing features extracted from the high resolution image with pre-stored features indicative of the authorised user.

In an embodiment, a comparison is made between the low resolution image and the high resolution image to check that the high resolution image captures an image of the same face as the low resolution image. Thus, various anti-spoofing measures can be taken by checking for a correspondence between the images captured by the two cameras.

In an embodiment, when the comparison is made, the second image capture device is deactivated.

In an embodiment, at least one high definition image and at least one low definition image are used to recognise the face of an authorised user by using the low definition image to provide depth sensing information or other anti-spoofing measures.

In an embodiment, wherein the second image capture device is used as an ambient light sensor during operation of the device to control screen brightness of a display screen of the device.

In an embodiment, the cameras are both arranged on either the back or the front of the electronic device and are aligned to face the same direction.

In an embodiment, the first and second image capture devices each capture a plurality of images. Thus, the low power camera can be configured to capture a stream of images at regular intervals, e.g. every second, such that it is quick to respond to the presence of a face in its field of view. Similarly, once turned on, the high resolution camera can capture plural images for use in facial recognition.

In an embodiment, the second image capture device is a 3D sensor.

According to a second aspect of the present invention, there is provided an electronic device comprising:
a first image capture device;
a second image capture device, wherein the first image capture device has a lower resolution than the first image capture device;
processing means arranged to:
   place the electronic device in a first configuration, where a first image capture device is activated and a second image capture device is deactivated in the electronic device;
   capture at least a low resolution image with the first image capture device;
   analyse the low resolution image to detect the presence of a face in the image;
   where a face is detected, activate the second image capture device to capture at least one high resolution image;
   analyse at least the high resolution image to recognise the face of an authorised user of the device; and
   if the face is recognised, authenticate the user and place the device in a second configuration in which additional functionality of the device is made available to the user.

In an embodiment, analysing the high resolution image comprises comparing features extracted from the high resolution image with pre-stored features indicative of the authorised user.

In an embodiment, at least one high definition image and at least one low definition image are used to recognise the face of an authorised user by using the low definition image to provide depth sensing information or other anti-spoofing measures.

In an embodiment, the second image capture device is used as an ambient light sensor during operation of the device to control screen brightness of a display screen of the device.

In an embodiment, the cameras are both arranged on either the back or the front of the electronic device and are aligned to face the same direction.

In an embodiment, the device is a mobile phone, tablet computer or other mobile computing device.

It will be appreciated that any features expressed herein as being provided "in one example" or "in an embodiment" or as being "preferable" may be provided in combination with any one or more other such features together with any one or more of the aspects of the present invention. In particular, the extendible member, joining techniques and join testing system described in relation to one aspect may generally be applicable to the others.

Embodiments of the present invention will now be described by way of example with reference to the accompanying drawings, in which:
Figure 1 shows a prior art mobile phone using two cameras for facial recognition;
Figure 2 shows from the front an electronic device according to an embodiment of the present invention;
Figure 3 shows from the rear an electronic device according to another embodiment of the present invention; and,

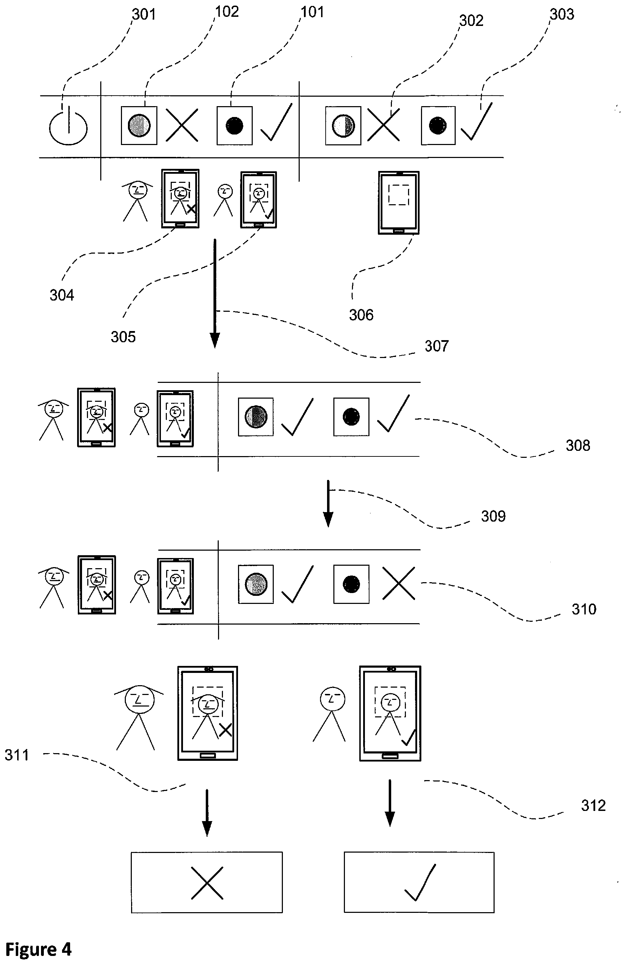

Figure 4 shows a flow diagram of the sequence of operations in unlocking the device 100 shown in Figures 2 and 3 using a method according to an embodiment of the present invention.

Preferred embodiments aim to address issues in power consumption and speed in performing facial recognition with an electronic device by way of optical sensing. The present techniques generally use dual optical sensors, e.g. cameras, in the device (i.e. at least two camera facing the same way) as part of this process.

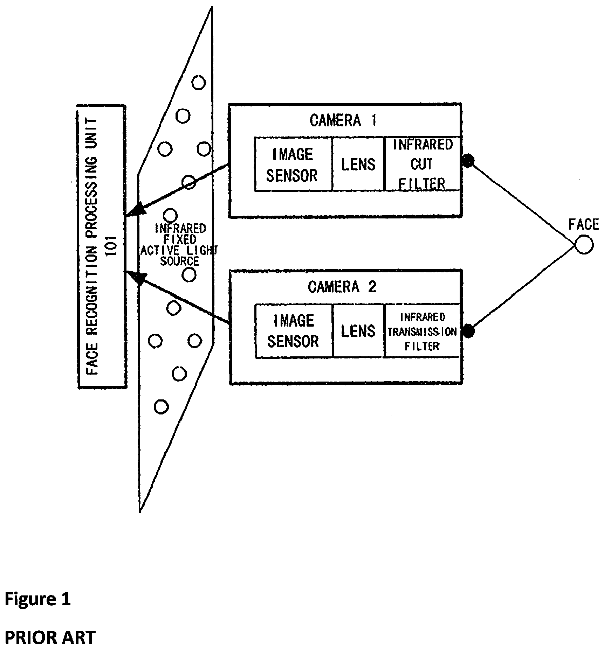

It is already known in some contexts to include dual cameras in a mobile device, which may play a part in facial recognition. For instance, as illustrated in Figure 1, EP2306367 describes a mobile phone having two camera, each of which has a different filter. This is used to build a more detailed view of the user's face by capturing different aspects of the user's face or under different lighting conditions, e.g. colour and monochrome. However, the problems described above relating to power drain in having both cameras activated at all times would still apply.

Other prior art, such as EP1608135 and CN103268474 describes using two cameras in a mobile phone for facial recognition in order to discern additional depth information to aid reliably identifying the user. For instance EP1608135 relates to the provision of two cameras in a portable communication device. The cameras are arranged to record simultaneous images of a subject. Subsequently, these simultaneous images can be combined to provide a three dimensional image of the subject, thereby providing enhanced visual information on which to base the identification. CN103268474 relates to similar techniques. Again, no solution is found to the problem of power conservation and speed when using facial recognition.

In CN 203733133 U, an additional camera is provided in a mobile phone to aid biometric identification, i.e. iris scanning. Again, no solution is found to the problem of power conservation and speed when using facial recognition via power draining sensors in the device.

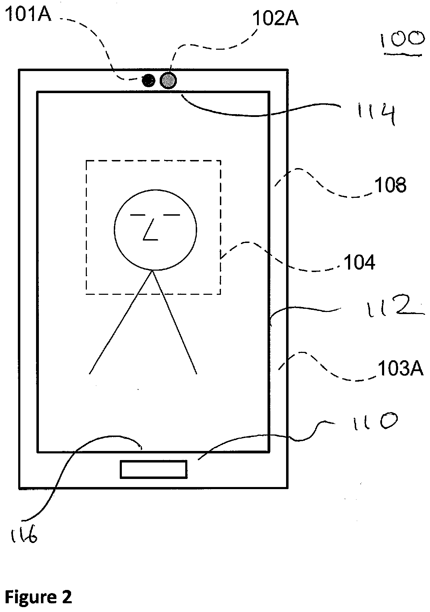

Figure 2 shows an example of an electronic device 100 according to an embodiment of the invention. In this example the electronic device 100 is a mobile phone and is shown from the front, i.e. front face 103A. The device 100 comprises a case 108, a home key 110 and a display 112. The display 112 in this example is a touch screen which also allows user input, although in other examples a dedicated keypad may be provided for user input. The device 100 further comprises a speaker 114 and microphone 116 concealed at the top and bottom edges of the screen 112. Internally, the device will comprise a battery for powering the device and memory and a processing device for performing the various functionality of the device (not shown), including the functionality described herein.

The device 100 comprises two image capture devices 101 and 102, which in Figure 2 take the form of cameras 101A, 102A provided in the front face of the device 103A. The cameras are generally positioned and arranged to capture the face of a user under expected normal usage conditions of the device, i.e. with the user holding the device 100 with the screen 112 facing him. Of course, the user can direct the device to aim the cameras at any desired object for capturing an image.

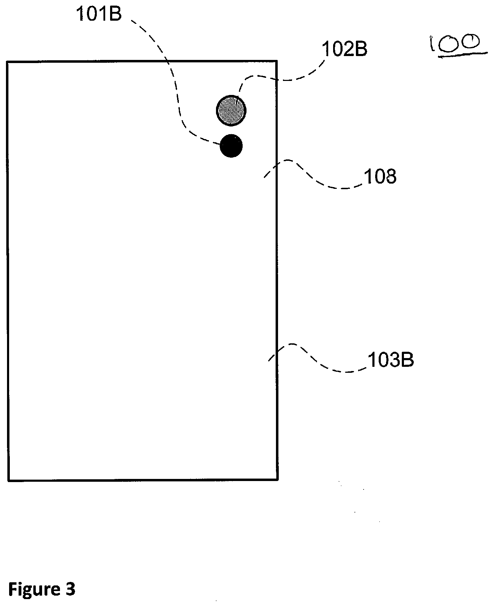

Figure 3 shows another example of an electronic device 100, which again takes the form of a mobile phone. In this case, the mobile phone is shown from the rear, i.e. rear face 103B. The device 100 has similar features and functionality as described above in relation to Figure 2. However, in this example, the cameras 101B, 102B are provided in the rear face of the device 103B.

In both examples, the first camera 101 is a ultra-low power camera with very low resolution and refresh rate. Owing to the low-power nature of the camera, this camera can be an always-on type. The second camera 102 is a high resolution camera with stand-by function. Thus, in the example of Figure 2, this camera can be used for so-called "selfie" photographs of the user in which the image captured by the device is displayed on the screen 112. In the examiner of Figure 3, the high resolution camera can be the main camera for capturing photographs.

As shown in below figure invention uses dual front camera. One of those cameras is high resolution front (selfie) camera with standby function and the other one is ultra-low power and low-res always-on camera (means that no standby). This low resolution camera is also very low frame rate down to 5 fps (20ms) so that operating at <1mW range which is considerably negligible.

The device 100 may have more than two cameras, or may have cameras at both the front and rear of the device.

Figure 3 illustrates a sequence of steps for unlocking the device 100 using facial recognition of the user.

In the initial state 301, the device is "locked" (indicated by lock screen symbol) such that the main functionality of the device is unavailable until an authorised user is authenticated by the facial recognition function.

As generally known in the art, there is typically a "training" phase when the user initially configures the facial recognition functionality, where the device "learns" to recognise the face of the authorised user. Typically, one or more images of the user's face are captured by the cameras of the device, i.e. the high resolution camera in the present examples. From the images, various features are extracted characteristic of a particular user's face and stored for comparison with new images taken when a user tries to authenticate himself to the device in the future. Typically user rights indicating what an authenticated user is authorised to do are stored with in a user profile linked to the extracted features. Thus, a user that is authenticated by way of facial recognition may be authorised to unlock the device to access the full functionality of the device.

In this initial state 301, the high resolution camera 102 is kept on standby mode (indicated by the cross) but on the other hand low power camera is turned on to capture images (indicated by the tick). Images captured by the low resolution camera 101 are analysed to detect a face. The device 100 keeps its state until a face detected by low power camera 101. This face detection is only looking to face presence without doing any recognition. Suitable techniques for recognising the presence of a human face are generally known in the prior art and are not described in detail herein.

Thus, when no face is detected in the image or images captured by the low resolution camera 101 (as shown by captured image 306), the device stays in the initial s1 state. However, when a human face or faces are detected in the images - whether the image of an authorised user (image 305) or an unauthorised user (306) - the device 100 enters (307) the second state 308.

In the second state 308, the device 100 turns on high resolution camera 102 and this camera captures one or more images which are analysed to try to recognize the face in the captured image. At this point both cameras are working simultaneously, but all recognition work is done by high resolution camera 102. However, the low resolution camera preferably still keeps tracking the face to reduce the risk of spoofing the facial recognition system using a photo. Alternatively or additionally, because there are two cameras and they have some separation, the system can extract distance information by using images captured by both cameras. This information can be used for depth sensing or anti-spoofing measures.

After a face is recognized by the high resolution cameras, the low resolution camera can be turned off selectively (state 310).

If a face captured in the image of the high resolution camera is not recognised, the failure is communicated to the user by way of the screen or other feedback and the device remains locked (311). However, if the face is recognised, the user is authenticated and may be authorised to use the full functionality of the device, i.e. the device is unlocked (312).

If the face is not recognised (311) the device 100 can continue to capture further images and repeat the attempt to recognise the face, possibly after some predetermined delay. If a face is no longer detected in either the low resolution camera 101 or the high resolution camera 102, the device 100 can deactivate the high resolution camera 102 and return to the first state 301. Alternatively, where facial recognition has failed, the device 100 can immediately deactivate the high resolution camera 102 and the return to the first state 301, or do so after some set time period has elapsed.

In another example, when the low resolution camera 101 detects a face, this can trigger activation of a 3D sensor, such as structured light sensor or time-of-flight sensor, instead of a RGB camera (main camera or selfie camera). The 3D sensor may have better face recognition performance.

Where the device 100 front cameras 101,102, e.g. a selfie camera or front looking 3D sensor, the low power camera 101 can additionally function as an ambient light sensor. This can be used by the device 100 to implement various functionality, such as automatically adjusting the screen brightness in view of the ambient light. This minimises use of components and so that overall cost of manufacturing the device can be reduced. Where the low resolution camera replaces an ambient light sensor, the overall cost of the device is minimally affected in implementing the facial recognition scheme described herein.

Although unlocking of a mobile phone is described, the facial recognition can be used for other purposes where it is desired to authenticate a user, such as authorising financial transactions, etc. The facial technology can be used in any electronic device having dual cameras as described, where facial recognition capabilities are desired. The techniques are particularly useful in portable and/or battery powered devices where power saving is particularly important. Thus, the techniques are applicable to tablet computers, notebook computers, and the like.

Embodiments of the present invention have been described with particular reference to the example illustrated. However, it will be appreciated that variations and modifications may be made to the examples described within the scope of the present claims.

## Claims

1. A method of facial recognition for authenticating a user of an electronic device: the method comprising:
in a first configuration of the electronic device, where a first image capture device is activated and a second image capture device is deactivated in the electronic device, the first image capture device having lower resolution than the second image capture device, capturing at least a low resolution image with the first image capture device;
analysing the low resolution image to detect the presence of a face in the image;
where a face is detected, activating the second image capture device to capture at least one high resolution image;
analysing at least the high resolution image to recognise the face of an authorised user of the device; and
if the face is recognised, authenticating the user and placing the device in a second configuration in which additional functionality of the device is made available to the user.

2. A method according to claim 1, wherein analysing the high resolution image comprises comparing features extracted from the high resolution image with pre-stored features indicative of the authorised user.

3. A method according to claim 1 or claim 2, wherein a comparison is made between the low resolution image and the high resolution image to check that the high resolution image captures an image of the same face as the low resolution image.

4. A method according to claim 3, wherein when the comparison is made, the second image capture device is deactivated.

5. A method according to any preceding claim, where at least one high definition image and at least one low definition image are used to recognise the face of an authorised user by using the low definition image to provide depth sensing information or other anti-spoofing measures.

6. A method according to nay preceding claim, wherein the second image capture device is used as an ambient light sensor during operation of the device to control screen brightness of a display screen of the device.

7. A method according to any preceding claim, wherein the cameras are both arranged on either the back or the front of the electronic device and are aligned to face the same direction.

8. A method according to any preceding claim, wherein the first and second image capture devices each capture a plurality of images.

9. A method according to any preceding claim, wherein the second image capture device is a 3D sensor.

10. An electronic device comprising:
a first image capture device;
a second image capture device, wherein the first image capture device has a lower resolution than the first image capture device;
processing means arranged to:
place the electronic device in a first configuration, where a first image capture device is activated and a second image capture device is deactivated in the electronic device;
capture at least a low resolution image with the first image capture device;
analyse the low resolution image to detect the presence of a face in the image;
where a face is detected, activate the second image capture device to capture at least one high resolution image;
analyse at least the high resolution image to recognise the face of an authorised user of the device; and
if the face is recognised, authenticate the user and place the device in a second configuration in which additional functionality of the device is made available to the user.

11. A device according to claim 10, wherein analysing the high resolution image comprises comparing features extracted from the high resolution image with pre-stored features indicative of the authorised user.

12. A device according to any preceding claim, where at least one high definition image and at least one low definition image are used to recognise the face of an authorised user by using the low definition image to provide depth sensing information or other anti-spoofing measures.

13. A device according to any preceding claim, wherein the second image capture device is used as an ambient light sensor during operation of the device to control screen brightness of a display screen of the device.

14. A device according to any preceding claim, wherein the cameras are both arranged on either the back or the front of the electronic device and are aligned to face the same direction.

15. A device according to any preceding claim, wherein the device is a mobile phone, tablet computer or other mobile computing device.
